# EUROPEAN PATENT APPLICATION

(11) **EP 4 725 793 A1**
(43) Date of publication of application: **15.04.2026**
(21) Application number: 25207244.2
(22) Date of filing: 07.10.2025
(51) Int. Cl.: B62B 7/00, B62B 7/14

(54) **A PUSHCHAIR ASSEMBLY AND AN ADAPTOR FOR A PUSHCHAIR ASSEMBLY**

(30) Priority: 09.10.2024 GB 202414849
(71) Applicant: Mamas & Papas (Holdings) Limited, West Yorkshire, HD5 0RH (GB)
(72) Inventor: SMITH, Peter, Huddersfield, HD5 0RH (GB)
(74) Representative: Haseltine Lake Kempner LLP

(57) **Abstract**

A pushchair assembly for mounting a second seat (220) on a pushchair frame (10) of a pushchair comprises: a second seat assembly (200), wherein the second seat assembly comprises: a subsidiary pushchair frame member (210) configured to couple to a frame member of the pushchair frame; and the second seat (220) for the pushchair mounted on the subsidiary pushchair frame member; and a second seat adaptor (700) having a first end and a second end, wherein the adaptor comprises a second seat coupling (710) at the first end, the second seat coupling configured to couple to the second seat assembly; a pushchair frame coupling (704) between the first and second ends for coupling to the pushchair frame; and a primary seat coupling (702) at the second end, wherein the primary seat coupling is for supporting a primary seat of the pushchair. An adaptor for mounting primary and second seats on a pushchair frame is also provided.

## Description

### Technical Field

The present disclosure relates to a pushchair assembly for supporting a second seat on a pushchair frame, and adaptors for the pushchair assembly.

### Background

Pushchairs are often used by parents or other users to transport children with them on a journey by foot, particularly when children are too young or are otherwise unable to walk for all of part of the journey. The pushchair typically provides a comfortable seat or cot for the child to sit or lie in. The pushchair seat or cot is supported by a pushchair frame having a handle or handle bar and plurality of wheels, so that the pushchair can be comfortably pushed along by the user.

For pushchair users with more than one child, it may be desirable for a single pushchair to be capable of carrying more than one child. Furthermore, it is desirable that carrying more than one child in the pushchair should not affect the stability or ease of use of the pushchair.

### Statements of Invention

According to an aspect of the present disclosure, there is provided a pushchair assembly for mounting a second seat on a pushchair frame of a pushchair, the pushchair assembly comprising: a second seat assembly, wherein the second seat assembly comprises: a subsidiary pushchair frame member configured to couple to a frame member of the pushchair frame; and the second seat for the pushchair mounted on the subsidiary pushchair frame member; and a second seat adaptor having a first end and a second end, wherein the adaptor comprises a second seat coupling at the first end, the second seat coupling configured to couple to the second seat assembly; a pushchair frame coupling between the first and second ends for coupling to the pushchair frame; and a primary seat coupling at the second end, wherein the primary seat coupling is for supporting a primary seat of the pushchair.

The subsidiary pushchair frame member may be configured, e.g. shaped, to be placed alongside a frame member of the pushchair frame when the subsidiary pushchair frame member is coupled to the frame member, e.g. between positions on the subsidiary pushchair frame member is coupled to the pushchair frame member.

The second seat assembly may comprise one or more latches for coupling to one or more complementary latch coupling portions on the pushchair frame. The latches may be spaced apart from one another in a lateral direction of the second seat assembly and the pushchair.

The pushchair frame coupling may be a seat dock coupler configured to couple to a seat dock of the pushchair frame. The primary seat coupling of the adaptor may correspond in shape to the seat dock of the pushchair frame. The primary seat coupling may comprise an adaptor seat dock for the primary seat of the pushchair assembly to be docked to. The adaptor seat dock may be configured to correspond in shape to the seat dock of the pushchair to which the second seat adaptor, e.g. the pushchair frame coupling, couples.

The adaptor may comprise a protrusion configured to engage a frame member of the pushchair frame between the pushchair frame coupling and the second end, in order to prevent or restrict rotation of the adaptor relative to the pushchair frame at the seat dock.

The second seat assembly may comprise a hook portion configured to hook around a frame member of the pushchair frame and guide rotation of the second seat assembly about the frame member towards a position in which the second seat assembly further couples to the pushchair frame.

The assembly may further comprise the pushchair frame. The pushchair frame may comprise an arcuate frame member. A shape of the subsidiary pushchair frame member may correspond to a shape of the arcuate frame member. The pushchair frame may comprise a laterally extending frame member extending between front leg members of the frame. The subsidiary pushchair frame member may be configured, e.g. shaped, to be placed alongside, and optionally in contact with, the laterally extending frame member

The one or more complementary latch coupling portions may be provided on the laterally extending frame member and/or one or more other frame members adjacent the laterally extending frame member.

The second seat coupling of the adaptor may comprise an arcuate projection portion configured to be received within a recess formed in the second seat assembly. Additionally o alternatively, the recess may comprise an internal wall configured to engage the second seat coupling to guide movement of the adaptor as the adaptor is coupled to the second seat assembly to permit the pushchair frame coupling of the adaptor to couple to the pushchair frame, e.g. a seat dock of the pushchair frame.

According to another aspect of the present disclosure, there is provided an adaptor for mounting primary and second seats on a pushchair frame, wherein the adaptor has a first end and a second end, and a pushchair frame coupling arranged between the first and second ends for coupling the adaptor to the pushchair frame, e.g. to a seat dock of the pushchair frame, wherein the adaptor comprises a second seat coupling, for coupling to the second seat [e.g. to a second seat assembly comprising the second seat], at the first end of the adaptor, and a primary seat coupling, for the primary seat to couple to the adaptor, at the second end of the adaptor, wherein the adaptor is free from couplings for directly coupling the adaptor to the pushchair frame between the pushchair frame coupling and the first end of the adaptor.

According to another aspect of the present disclosure, there is provided a method of mounting a second seat on a pushchair frame, e.g. of a pushchair, using a pushchair assembly, wherein the pushchair assembly comprises a second seat assembly comprising: a subsidiary pushchair frame member configured to couple to a frame member of the pushchair frame; and the second seat for the pushchair mounted on the subsidiary pushchair frame member, wherein the method comprises:
coupling the subsidiary pushchair frame member to the pushchair frame; and
coupling a second seat adaptor of the pushchair assembly to the second seat assembly and the pushchair frame, wherein the adaptor comprises a first end and a second end, wherein the adaptor comprises a second seat coupling at the first end for coupling to the second seat assembly, a pushchair frame coupling between the first and second ends for coupling to the pushchair frame; and a primary seat coupling at the second end, wherein the primary seat coupling is for supporting a primary seat for the pushchair.

The method may further comprise coupling, e.g. initially coupling, the subsidiary pushchair frame member to a frame member of the pushchair frame using a hook portion provided on the subsidiary pushchair frame member.

The method may further comprise coupling, e.g. further coupling, the subsidiary pushchair frame member, to the pushchair frame by rotating the second seat assembly about the frame member coupled to the hook portion.

The method may further comprise inserting an adaptor protrusion of the adaptor into a recess in the second seat assembly in order to couple the adaptor to the second seat assembly.

The method may further comprise rotating the adaptor as the protrusion is inserted into the recess, e.g. such that movement of the adaptor is at least partially guided and/or supported by engagement between a guide surface of the adaptor protrusion and an internal wall of the recess.

The method may further comprise coupling the second seat adaptor to the pushchair frame as the protrusion is inserted into the recess.

The method may further comprise coupling a primary seat of the pushchair to the second end of the second seat adaptor such that the primary seat is supported on the pushchair frame by the adaptor.

To avoid unnecessary duplication of effort and repetition of text in the specification, certain features are described in relation to only one or several aspects or embodiments of the invention. However, it is to be understood that, where it is technically possible, features described in relation to any aspect or embodiment of the invention may also be used with any other aspect or embodiment of the invention. For example, features described in relation to the first mentioned aspect may be combined with the features of the second and third mentioned aspects.

### Brief Description of the Drawings

For a better understanding of the present invention, and to show more clearly how it may be carried into effect, reference will now be made, by way of example, to the accompanying drawings, in which:
Figure 1a is a front perspective view of a pushchair comprising a pushchair assembly, according to arrangements of the present disclosure;
Figure 1b is an exploded view of the pushchair shown in Figure 1a;
Figure 1c is a cross-sectional view of the pushchair shown in Figure 1a;
Figure 2 is a front perspective view of the pushchair prior to assembly of a second seat assembly of the pushchair assembly to the pushchair;
Figure 3 is a front perspective view of the pushchair during assembly of the second seat assembly to the pushchair;
Figure 4 is a front perspective detail view of the second seat assembly illustrating a latch of the second seat assembly;
Figure 5 is a side perspective detail view of a frame member of the pushchair illustrating a complementary latch coupling portion of the pushchair;
Figure 6 is a cross-sectional view of the latch of the second seat assembly;
Figure 7 is a front perspective view of the pushchair during assembly of an adaptor of the pushchair assembly to the pushchair;
Figure 8 is a rear perspective detail view of the pushchair prior to assembly of an adaptor of the pushchair assembly to the second seat assembly;
Figure 9 is a rear perspective detail view of the pushchair during assembly of the adaptor to the second seat assembly;
Figure 10 is a front perspective view of the pushchair comprising the pushchair assembly;
Figure 11 is a cross-sectional view of a pushchair frame coupling of the adaptor of the pushchair assembly;
Figure 12 is a flow chart illustrating a method of assembling a pushchair assembly to a pushchair, according to arrangements of the present disclosure; and
Figure 13 is a flow chart illustrating a method of assembling a pushchair assembly, according to another arrangement of the present disclosure.

### Detailed Description

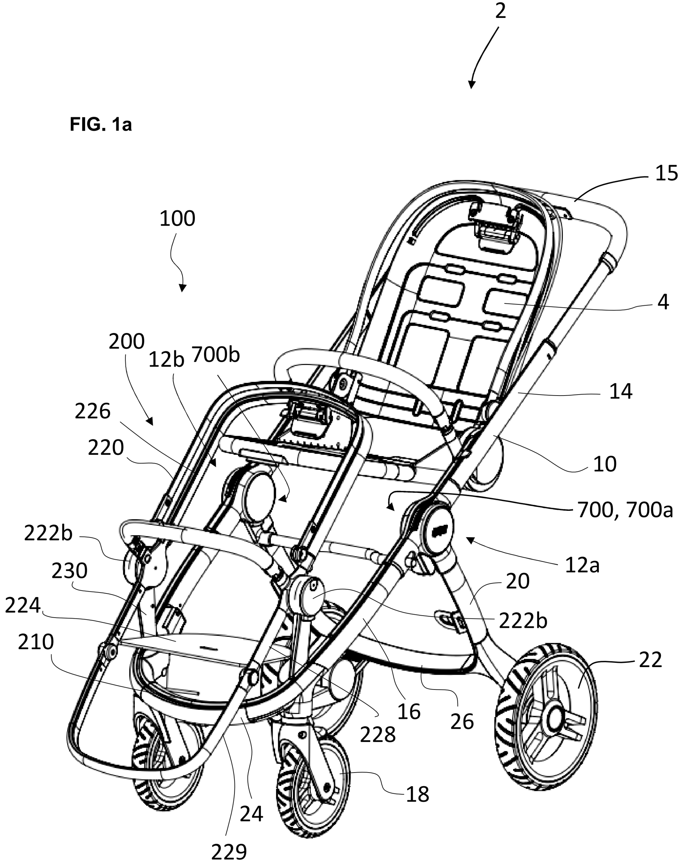

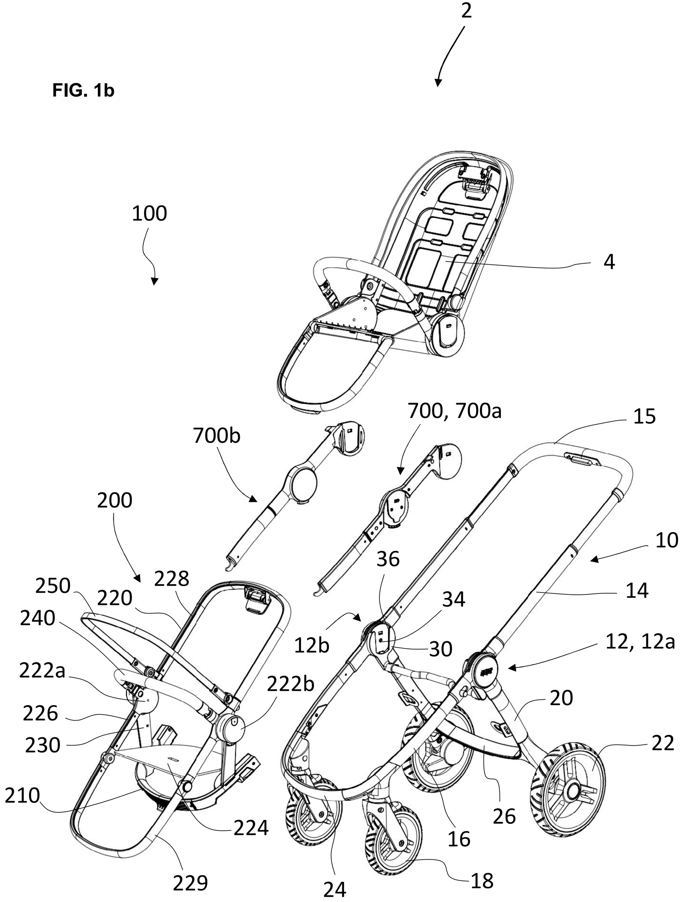

With reference to Figures 1a and 1b, a pushchair 2 comprises a pushchair frame 10, a seat 4, e.g. a reclinable and/or foldable seat, for a child to sit or lie on, and a pushchair assembly 100, according to arrangements of the present disclosure. The pushchair assembly 100 comprises a second seat assembly 200 and an adaptor 700. As described herein, the pushchair assembly 100 is for supporting a second seat on the pushchair frame.

The seat 4 may be configured to be mounted directly on the pushchair frame 10 and may be referred to as a primary seat of the pushchair. However, as illustrated, when the pushchair assembly 100 is provided on the pushchair 2, the seat 4 may be mounted on the pushchair frame 10 by the pushchair assembly 100.

In other arrangements, another type of attachment for a child to sit or lie on, such as a carrycot or car seat, may be supported on the pushchair frame 10, e.g. via the pushchair assembly 100, instead of the seat 4. The term "seat" is used throughout this disclosure to refer to any attachment that can be supported on the pushchair frame 10 or the pushchair assembly 100 for a child to sit or lie on.

The pushchair frame 10 comprises a pushchair hinge assembly 12a provided on a left side of the pushchair frame and a further pushchair hinge assembly 12b provided on a right side of the pushchair frame. As described below, frame members of the pushchair frame 10 may be coupled to either of both of the hinge assemblies, which may be configured to enable the frame members to rotate relative to one another other about the hinge assemblies in order to fold the pushchair frame 10.

In the description below, features of the pushchair frame 10, and in particular frame members of the pushchair frame and their connections with hinge assembly 12a, on one lateral side of the pushchair frame are described. However, it will be appreciated that the pushchair frame 10 may be symmetrical between left and right, lateral sides of the pushchair frame, and hence, a similar arrangement of components, such as frame members and hinge assembly, may be provided on both lateral sides of the pushchair frame 10.

The pushchair frame 10 may comprise a handle frame member 14 extending, e.g. upwardly and/or rearwardly, from the pushchair hinge assembly 12a and a handlebar 15 extending between the distal end of the handle frame member 14 and the distal end of another handle frame member provided on the other lateral side of the pushchair frame. The handlebar 15 may be for a user to grip in order to push the pushchair. In other arrangements, the pushchair frame 10 may not comprise the handlebar extending between the handle frame members 14 and may instead comprise handles, e.g. separate handles, coupled to the handle frame members 14 for the user to grip when pushing the pushchair.

The pushchair frame 10 further comprises a first leg frame member, e.g. a front leg frame member 16, extending from the pushchair hinge assembly 12a for supporting one or more front wheels 18 of the pushchair, and a second leg frame member, e.g. a rear leg frame member 20, extending from the pushchair hinge assembly 12a for supporting one or more rear wheels 22 of the pushchair.

The pushchair frame 10 may comprise a front lateral frame member 24 extending laterally between distal ends of the front leg frame members 16 provided on either lateral side of the pushchair frame. As illustrated, the front lateral frame member 24 may be arcuate or comprise one or more arcuate portions. In some arrangements, the front lateral frame member 24 may be integrally formed with one or both of the front leg frame members 16. In such arrangements, a single frame member may extend from the pushchair hinge assembly 12a on one side of the pushchair frame to one of the front wheels 18, laterally across to the other of the front wheels 18, and from the other of the front wheels to the further pushchair hinge assembly 12b on the other side of the pushchair frame.

Similarly, the pushchair frame 10 may comprise a rear lateral frame member 26 extending laterally between distal ends of the rear leg frame members 20. In some arrangements, the rear lateral frame member 26 may be integrally formed with one or both of the rear leg frame members 20. In such arrangements, a single frame member may extend from the pushchair hinge assembly 12a on one side of the pushchair frame to one of the rear wheels 22 laterally across to the other of the rear wheels 22, and from the other of the rear wheels to the pushchair hinge assembly 12b on the other side of the pushchair frame.

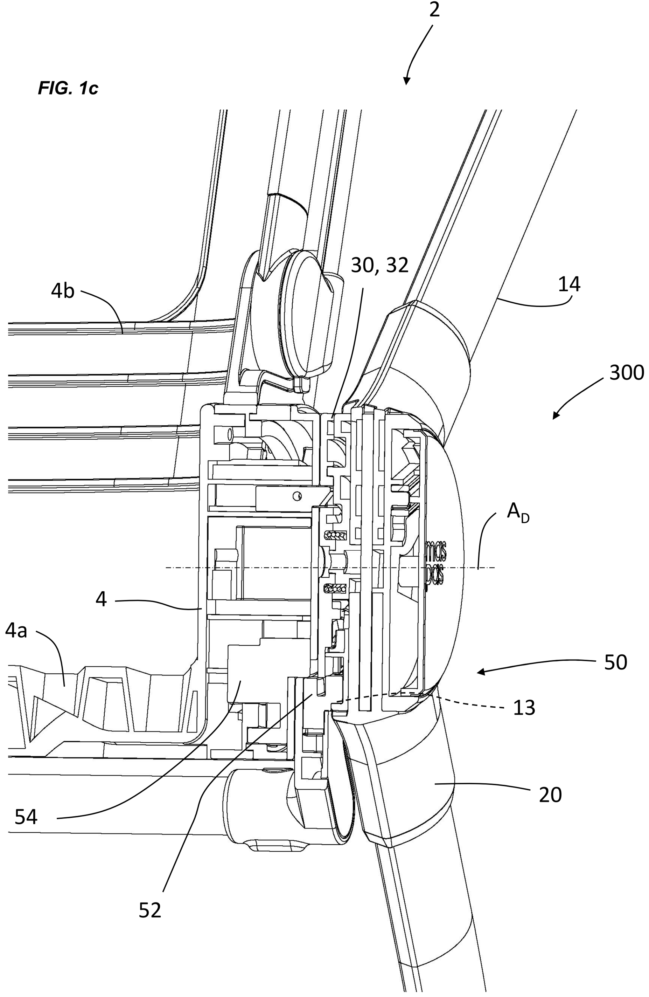

With referenced to Figure 1c in addition to Figures 1a and 1b, The pushchair frame may further comprise a seat dock 30 coupled to the pushchair hinge 12. The seat dock 30 is for the primary seat 4 of the pushchair to be coupled to the pushchair frame, e.g. in order to be supported on the pushchair. The seat dock 30 may be pivotally coupled to the pushchair hinge 12a to enable the seat dock 30 to rotate relative to the pushchair hinge about a dock pivot axis A_{D}. The dock pivot axis may be perpendicular to directions in which handle member, first leg member and second leg member extend from the pushchair hinge. For example, the dock pivot axis may be parallel with a lateral direction of the pushchair.

The seat dock 30 may comprise a body part 32, which may comprise a substantially plate shaped and may have one or more flange portions projecting perpendicular to the plate shaped portion. A shape of the body part 32 e.g. in a plane perpendicular to the dock pivot axis A_{D}, may correspond to a cross-sectional shape of the hinge assembly, e.g. in the plane perpendicular to the dock pivot axis A_{D}. When the hinge body is substantially cylindrically shaped, the body part 32 of the seat dock may comprise a substantially circular plate. In such arrangements, the dock pivot axis A_{D} may be aligned with a central axis of the circular plate. Additionally or alternatively, the dock pivot axis may be aligned or parallel with the central axis of the hinge assembly.

The seat dock 30 may comprise a docking socket 34, e.g. coupled to the body part, configured to enable a seat for a pushchair, e.g. the primary seat, to be mounted to the seat dock, e.g. via a correspondingly shaped docking plug provided on the seat. The docking socket 34 may form a docking channel through which the docking plug can be inserted to couple to the docking socket in a docking direction. The docking socket 34 comprises one of more socket surfaces 36 which are parallel with the docking direction in which the docking plug of the seat or adaptor can be inserted into the docking socket 34. The socket surfaces 36 may be to guide the docking plug into the docking socket and/or support the docking plug when received within the docking socket.

The seat dock 30 may be coupled, e.g. pivotally coupled to an axial end of the pushchair hinge assembly. In particular, the seat dock 30 may be coupled to an inner side of the pushchair hinge assembly, e.g. which faces the opposite lateral side of the pushchair frame. Accordingly, the primary seat 4 for the pushchair may be supported between hinge assemblies provided on either lateral side of the pushchair. In particular, the seat may be supported between the seat docks 30 on the respective pushchair hinge assemblies.

In some arrangements, a particular primary seat may be configured to couple to the seat dock 30 via one or more primary seat adaptors. In such arrangements, the primary seat adaptors comprise a docking plug, configured to be received within the docking socket 34, and one or more seat coupling features configured to enable the seat to be coupled to the adaptors. In further arrangements, as described herein, second seat adaptors configured to couple to the seat dock 30 may be configured to support more than one seat, e.g. two seats, on the pushchair frame, e.g. in tandem arrangement.

The seat dock 30 may be rotatable relative to the hinge assembly between a deployed position, in which a seat supported on the pushchair frame via the seat dock is in an appropriate orientation for a child to be seated or lying on the seat, and a folded configuration, in which the seat dock is pivoted about the dock pivot axis relative to the deployed position. For example, in the folded configuration, at least part of the seat may be substantially parallel with the front leg frame member 16.

As illustrated in Figure 1b, when the hinge assembly 12b including the seat dock 30 is in the deployed position, the socket surface 36 may be at an angle relative to the first and second leg members and the handle member. For example, in the deployed position, the socket surface 36 may be substantially parallel with a vertical direction, e.g. when the pushchair frame 10 is in the deployed position and the pushchair is in an upright position, such as standing on the front and rear wheels 18, 22. When the seat dock is in the deployed position, the docking direction may be a substantially vertical direction.

When the seat dock 30 is in the folded position, the socket surface 36 may be parallel with a direction at an angle relative to the vertical direction. For example, the socket surface may be approximately or substantially parallel with the front leg frame member 16. The seat dock 30 may be configured to rotate through an angle of greater than or equal to 90 degrees between the deployed position and the folded position.

With reference to Figure 1c in particular, the seat dock 30 may comprise a dock locking mechanism 50 configured to selectively lock the seat dock 30 in the deployed configuration. In particular, the dock locking mechanism 50 may be configured to lock the seat dock 30 in the deployed position, when a primary seat 4, or optionally a primary seat adaptor, is coupled to the seat dock.

The dock locking mechanism 50 may comprises a block part 52 arranged within the docking channel of the seat dock 30. The block part 52 is arranged such that, when a seat, or optionally a primary seat adaptor, is docked in the seat dock, the block part 52 is displaced by the seat, other attachment or primary seat adaptor to lock the dock locking mechanism. More particularly, the block part 52 may be urged out of the docking channel so that the block part 52 engages a complementary locking surface 13 of the hinge assembly and thereby locks the seat dock 30 relative to the hinge assembly, e.g. about the dock pivot axis A_{D}.

The block part 52 may be biased into a position in which the block part 52 is arranged at least partially within the docking channel and does not engage the complementary locking surface 13 of the hinge assembly. Hence, removing the primary seat 4, other attachment or primary seat adaptor the docking socket, may unlock the dock locking mechanism 50 to allow the seat dock 30 to rotate relative to the hinge body.

Returning to Figures 1a and 1b, the pushchair assembly 100, according to arrangements of the present disclosure, for mounting a second seat on the pushchair comprises a second seat assembly 200 including the second seat 220, and a second seat adaptor 700. Although in the description below a single adaptor 700 provided on one lateral side of the pushchair assembly 100 is described, it will be appreciated that, as depicted Figures 1a and 1b, the second seat assembly 200 may comprise first and second adaptors 700a, 700b which may be symmetrical to one another, provided on respective lateral sides of the pushchair assembly. The features described in relation to the second seat adaptor 700 may relate to the first and second seat adaptors 700a, 700b on each lateral side of the pushchair assembly.

The second seat assembly 200 comprises a subsidiary pushchair frame member 210. The second seat 220 for the pushchair is mounted on the subsidiary pushchair frame member 210 by one or more seat mounting members 230. As depicted, a seat mounting members 230 may be provided on either lateral side of the second seat 220 for coupling the second seat 220 to the subsidiary pushchair frame member 210 and supporting the second seat at a desired position relative to the subsidiary pushchair frame member 210.

The second seat 220 may comprise first and second seat hubs 222a, 222b provided on either lateral side of the seat. As shown, the second seat 220 may be coupled to the subsidiary pushchair frame member 210 via the second seat hubs 222a, 222b. In other words, the seat mounting members 230 may extend from the second seat hubs to the subsidiary pushchair frame member 210, in order to couple the second seat 220 to the subsidiary pushchair frame member 210.

In the arrangement depicted in the Figures, the first and second seat hubs 222a, 222b are substantially prism shaped, e.g. cylindrical, having central axes with a component in, or aligned with, a lateral direction of the second seat 220. However, in other arrangements, the second seat hubs 222a, 222b may be any other desirable shape.

The second seat 220 may further comprise a seat base 224, which may at least partially form a seat portion for a child to sit on. In particular, the seat base 224 may be a structural member for the seat portion which may be covered by one or more fabric and/or cushioning components in order to form the seat portion for the child to sit on.

The second seat 220 may further comprise one or more second seat frame members extending from the seat hubs. In particular, the second seat may comprise a pair of back frame members 226 extending upward and rearward from the seat hubs 222a, 222b on either lateral side of the second seat, and a pair of leg support frame members 228, which may extend from the seat hubs on either lateral side of the second seat in substantially opposite directions to the back frame members, e.g. downward and forward.

In the arrangement shown, the back frame members 226 and leg support frame members 228 are fixedly coupled to the second seat hubs 222a, 222b. Additionally, the seat mounting members 230 are fixedly coupled to the second seat hubs 222a, 222b. However, in other arrangements, back frame members 226 and/or leg support frame members 228 may be movably, e.g. pivotally, coupled to the second seat hubs. Moving, e.g. pivoting the back frame members 226 and/or leg support frame members 228 may enable the second seat 220 to be folded, e.g. in order to reduce the size of the second seat. The back frame members 226 and/or leg support frame members 228 may be selectively movably, e.g. pivotably, relative to the seat hubs and may be lockable in folded and/or unfolded positions of the second seat. Additionally or alternatively, the seat mounting members 230 may be movably, e.g. pivotally, coupled to the second seat hubs 222a, 222b. Moving, e.g. pivoting, the seat mounting members 230 relative to the second seat hubs may enable the position and/or angle at which the second seat 220 is mounted relative to the pushchair frame 10 to be selectively varied. The seat mounting members 230 may be selectively lockable relative to the second seat hubs in one or more positions.

The second seat 220 may comprise one or more fabric and/or cushioning components (not shown), coupled to the back frame members 226 and leg support frame members 228 for forming a back rest portion and a leg support portion of the second seat 220 respectively. In particular, fabric components of the second seat may extend across, e.g. laterally across, the second seat between the back frame members and between the leg support frame members to form the back rest portion and leg support portion of the second seat respectively. Further, the seat base 224 may be coupled to the second seat hubs by the one or more fabric components. For example, fabric components of the second seat may extend from the leg support portions to the seat base. The leg support portion may thereby form side walls, e.g. lateral side walls of the seat portion for the second seat.

In some arrangements, the second seat 220 may comprise a pair of footrest frame members 229 coupled, e.g. pivotally coupled, to distal ends of respective leg support frame members 228, e.g. on opposite lateral sides of the second seat. The footrest frame members 229 may be selectively pivotable relative to the leg support frame members, in order to adjust an angle of a footrest portion of the second seat relative to the leg support portion. One or more of the fabric components of the second seat may be coupled to the footrest frame members 229 in order to form the footrest portion of the second seat. For example, one or more of the fabric components may extend between the footrest frame members, e.g. laterally between, to form the footrest portion.

As illustrated, the second seat 220 may further comprise a bumper bar 240 couplable to the second seat hubs 222a, 222b, e.g. in order to extend across (laterally across) the second seat. The second seat may additionally or alternatively comprise a canopy support 250 coupled, e.g. pivotally coupled, to the back frame members 226 in order to support a canopy for the second seat between the back frame members. The canopy support 250 may be pivotally coupled to the back frame members to enable an extent to which the canopy extends over the back rest portion and/or seat portion of the second seat from a head end of the second seat towards a foot end of the second seat (e.g. in a longitudinal direction of the second seat) to be selectively varied.

The subsidiary pushchair frame member 210 may be configured to couple to the pushchair frame 10, e.g. one or more frame members of the pushchair frame, in order to couple the pushchair assembly 100, e.g. the second seat assembly 200, to the pushchair frame 10.

As depicted in Figure 1, a shape of the subsidiary pushchair frame member 210 may substantially correspond to a shape of at least a portion of one or more frame members of the pushchair frame 10, such that the subsidiary frame member 210 can be placed alongside and, optionally, in contact with the portion of the one or more frame members when the second seat assembly 200 is coupled to the pushchair frame. For example, the shape of the subsidiary frame member 210 may substantially correspond to a shape of at least a portion of the front lateral frame member 24 or substantially the complete length of the front lateral frame member between the front leg frame members of the pushchair. Accordingly, at least a portion of the subsidiary pushchair frame member may be arcuate. Additionally, the shape of the subsidiary pushchair frame member 210 may correspond to at least a portion of one or both of the front leg frame members 16, e.g. portions of the front leg frame members adjacent to the front lateral frame member 24. The subsidiary pushchair frame member 210 may be configured, e.g. shaped, to be arranged on an inside surface of the front lateral frame member, e.g. relative to the arcuate shape of the front lateral frame member and, optionally, on an inner side of the front leg frame member(s), e.g. relative to a lateral direction of the pushchair frame.

Furthermore, as described in greater detail below, the second seat assembly 200, e.g. the subsidiary frame member 210, may be couplable to the pushchair frame 10 by virtue of coupling features provided at one or more coupling positions along the subsidiary frame member. The subsidiary pushchair frame member 210 may be configured, e.g. shaped, to be arranged alongside and, optionally, in contact with the portion of the one or more frame members of the pushchair frame between the coupling positions.

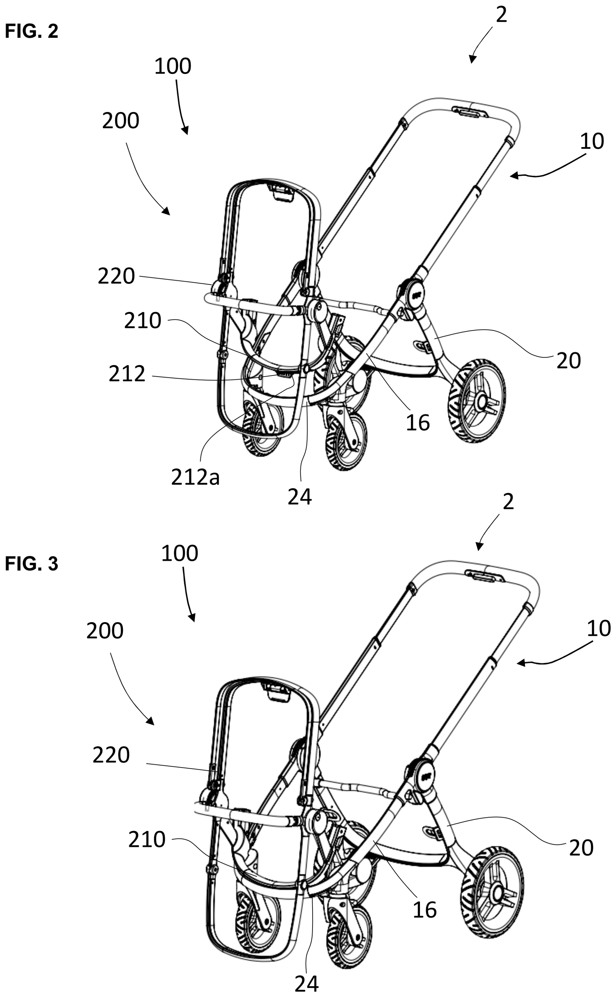

With reference to Figures 2 and 3, the second seat assembly 200, e.g. the subsidiary pushchair frame member 210 may comprise a hook portion 212, which may be one of the coupling features of the second seat assembly. The hook portion 212 may be configured to engage the pushchair frame 10 when the second seat assembly 200 is coupled to the pushchair frame, e.g. in order to at least partially secure the second seat assembly 200 relative to the pushchair frame 10. As illustrated the hook portion 212 may be substantially central on the subsidiary pushchair frame member 210 relative to a lateral direction of the second seat assembly. The hook portion 212 may be configured to engage, e.g. hook onto, the front lateral frame member 24 of the pushchair frame.

In order to couple the second seat assembly 200 to the pushchair frame 10, the hook portion 212 may initially be coupled to, e.g. hooked onto, a frame member of the pushchair frame, such as the front lateral frame member 24. A guide surface 212a of the hook portion, e.g. an inside surface of the hook portion, may engage the frame member and may guide moment, e.g. rotation, of the second seat assembly 200 relative to the pushchair frame.

By guiding movement of the second seat assembly 200, the hook portion, e.g. the guide surface 212a, may facilitate arrangement of the second seat assembly 200 into a position in which the second seat assembly, e.g. the subsidiary frame member 210, can be further coupled to the pushchair frame 10. The guide surface 212a of the hook portion may be configured, e.g. shaped, to support rotation of the second seat assembly about the frame member and thereby guide the second seat assembly to further couple to the pushchair frame, as described below.

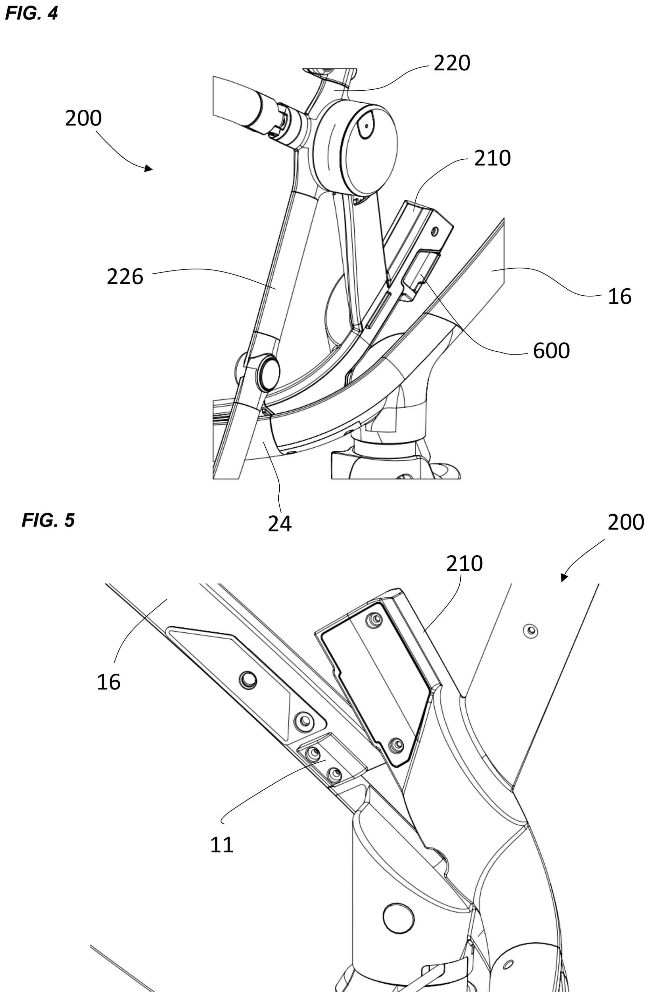

With reference to Figures 4 and 5, the second seat assembly 200 may further comprise one or more frame latches 600 for coupling the second seat assembly 200, e.g. the subsidiary pushchair frame member 210, to the pushchair frame 10. The latches 600 may be coupling features of the second seat assembly. The pushchair frame may comprise one or more, e.g. a corresponding number of, complementary coupling portions 11 for the frame latches 600 to couple to, in order to secure the second seat assembly 200 to the pushchair frame (e.g. in combination with the hook portion 212). The frame latches 600 may be provided on opposite lateral sides of the second seat assembly, e.g. at opposite ends of the subsidiary frame member 210.

As illustrated in Figure 5, the complementary coupling portions 11 may be provided on the front leg frame members 16, e.g. at distal ends of the front leg frame members. In particular, the complementary coupling portions 11 may be provided on the front leg frame members 16 at positions adjacent to the front lateral frame member 24. In other arrangements, the complementary coupling portions may be provided on the front lateral frame member 24. The complementary coupling portions 11 may be spaced apart from one another in a lateral direction of the pushchair. For example, the complementary coupling portions may be provided on the front leg frame members 16 on opposing lateral side of the pushchair frame 10 or at opposing lateral ends of the front lateral frame member 24.

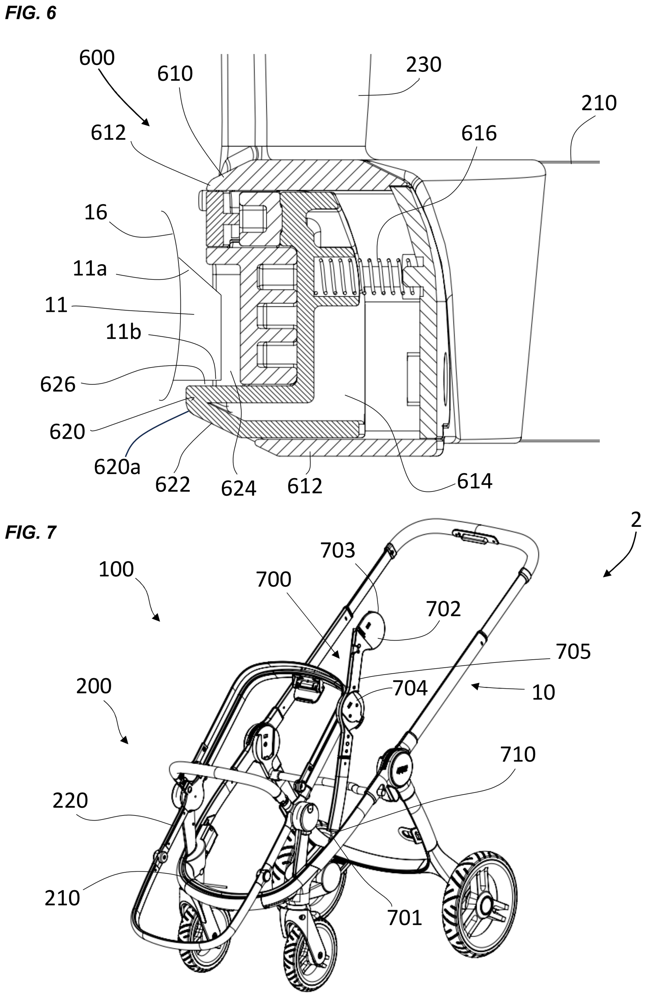

With reference to Figure 6 in addition to Figure 5, the latch 600 of the second seat assembly may comprise a latch body 610 comprising one or more walls 612 forming an interior space 614. The latch 600 may further comprise a coupling portion 620 coupled to the latch body 610. The coupling portion 620 may be movably, e.g. slidably, coupled to the latch body 610. In particular, the coupling portion 620 may be movable relative to the latch body 610 into and out of the interior space 614. The coupling portion 620 may be movable between a latched position, depicted in Figure 6, and an unlatched position in which the coupling portion 620 protrudes less from, or is received further within, the interior space 214. The coupling portion 620 may comprise a protruding portion 620a configured to protrude from the interior space of the latch when the coupling portion is in the latched position.

The coupling portion 620 may be biased into the latched position. For example, the latch 600 may comprise a resilient element 616, such as a coil spring, configured to bias the coupling portion 620 into the latched position.

The latch body 610 may be at least partially integrally formed with the subsidiary frame member 210. For example, one or more of the walls 612 of the latch body may be formed by the subsidiary frame member 210. The interior space 614 may be at least partially formed by a recess in the subsidiary frame member 210. Alternatively, the latch body 610 may comprise separate components coupled to the subsidiary frame member.

As mentioned above, when the second seat assembly 200 is assembled onto the pushchair, the second seat assembly 200 may be guided to couple to the pushchair frame by rotating the second seat assembly about the hook portion 212, which may cause the latch 600 to be moved in a downward direction relative to the pushchair frame (when the pushchair frame 10 is in an upright position, e.g. standing on the wheels 18, 22).

The coupling portion 620 may comprise a ramp surface 622 configured to engage a complementary ramp surface 11a formed on the complementary coupling portion of the frame when the second seat assembly 200 is assembled onto the pushchair frame. For example, the ramp surface 622 may be formed on a lower side of the coupling portion 620 and may protrude out of the interior space 614, e.g. when the coupling portion is in the latched position. The ramp surface 622 may be formed on the protruding portion 620a of the coupling portion, e.g. on a lower side of the protruding portion.

The complementary ramp surface 11a may be formed on an upper side of the complementary coupling portion 11. The ramp surface 622 and complementary ramp surface 11a may be configured such that when the second seat assembly is assembled onto the pushchair frame, e.g. by rotating the second seat assembly about the hook portion, the ramp surface 622 engages the complementary ramp surface 11a and the coupling portion 620 of the latch is urged to move towards the unlatched position to enable the complementary coupling portion to move past the ramp surface and optionally past the protruding portion.

The coupling portion 620 may comprise a coupling space 624 configured to receive the complementary coupling portion 11 when the latch is coupled to the complementary coupling portion, e.g. when the complementary coupling portion has moved past the ramp surface. The coupling space 624 may be formed on an opposite side of the protruding portion 620a from the ramp surface 622.

The coupling portion 620 may further comprise an abutment face 626. The abutment face may be formed between the ramp surface and the coupling space 624 and may define a boundary of the coupling space. For example, the abutment face 626 may be formed on the protruding portion, e.g. on an opposite side of the protruding portion from the ramp surface, such as an upper side.

The complementary coupling portion 11 may comprise a complementary abutment surface 11b configured to engage the abutment surface 626 when the complementary coupling portion 11 is received within he coupling space 624, e.g. when the latch is coupled to the complementary coupling portion. The abutment surface 626 and complementary abutment surface 11b may be configured, e.g. shaped, such that engagement between the abutment surface and complementary abutment surface acts to prevent the complementary coupling portion becoming decoupled from the latch. For example, engagement between the complementary abutment surface and the abutment surface may resist or prevent the complementary coupling portion moving out of the coupling space 624, e.g. during rotation of the second seat assembly about the hook portion 212.

The second seat assembly 200 may further comprise a latch retracting mechanism (not shown) configured to selectively retract the coupling portion 620 of the latch into the interior space 614 of the latch body, e.g. into the unlatched position. When the coupling portion 630 is in the unlatched position, the abutment surface 626 may not engage the complementary abutment surface 11b to restrict or prevent the complementary coupling member from decoupling from the latch, e.g. moving out of the coupling space 624. Using the latch retracting mechanism may thereby enable the second seat assembly 200 to be decoupled from the pushchair assembly. The second seat assembly 200 may comprise a latch actuator 202 configured to selectively actuate the latch retracting mechanism.

With reference to Figure 7, after the second seat assembly 200 is coupled to the pushchair frame, the second seat adaptor 700 may be coupled to the second seat assembly 200 and/or the pushchair frame 10. As described in greater detail herein, by coupling the second seat adaptor 700 to the second seat assembly 200 and/or the pushchair frame 10, the primary seat 4 of the pushchair may be supported on the pushchair frame with improved stability when two seats are mounted on the pushchair frame.

The adaptor 700 comprises a body portion 705 extending between a first end 701 and a second end 703. A second seat coupling 710, configured to couple to the second seat assembly 200, is provided at the first end 701 of the adaptor and a primary seat coupling 702, configured for supporting the primary seat 4 of the pushchair, is provided at the second end 703 of the adaptor.

The primary seat coupling may correspond in shape to the seat dock 30 on the pushchair frame, so that the primary seat can couple to the primary seat coupling in the same manner that the primary seat can couple to the pushchair frame. In other words, the primary seat coupling may be an adaptor seat dock configured to correspond to, e.g. be shaped similarly to, the seat dock 30 of pushchair frame.

The adaptor 700 further comprises a pushchair frame coupling 704 arranged between the first and second ends 701, 703 of the adaptor for coupling the adaptor 700 to the pushchair frame 10. In particular, the pushchair frame coupling 704 may comprise a seat dock coupler configured to couple to the seat dock 30 of the pushchair frame. The pushchair frame coupling 704 may be configured to correspond to a shape of seat dock coupling provided on the primary seat 4 of the pushchair, e.g. by which the primary seat can be coupled to the primary seat coupling 702 of the adaptor. The pushchair frame coupling 704 may therefore by configured, e.g. shaped, to couple to a seat dock of the pushchair frame, e.g. a seat dock of the pushchair frame to which the primary seat can be coupled.

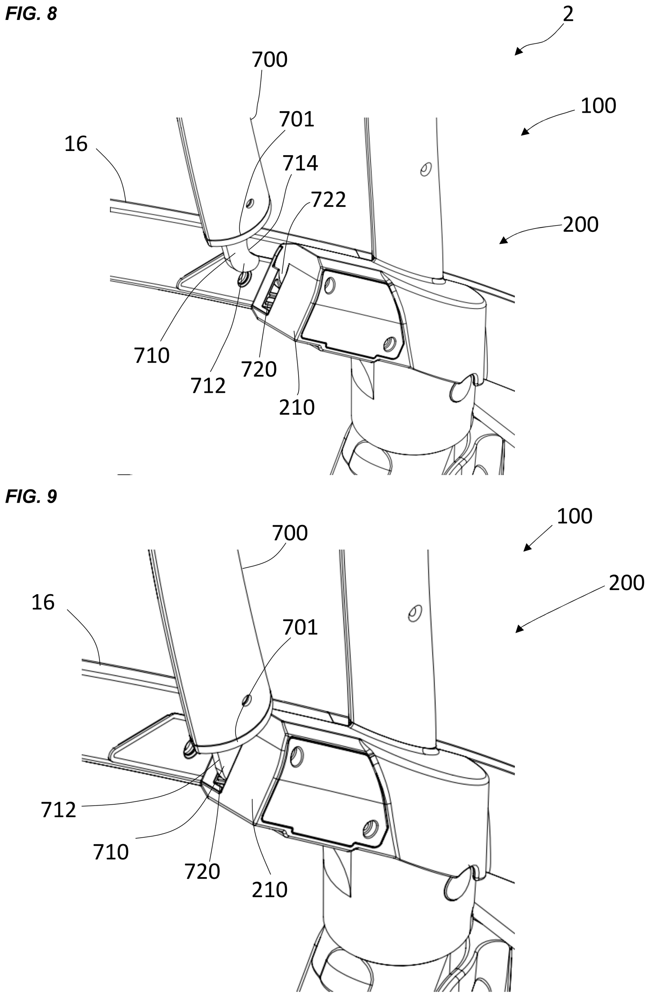

Referring now to Figures 8 and 9, the second seat coupling 710 may comprise an adaptor protrusion 712 configured to be received within an adaptor coupling recess 720 formed in the second seat assembly 200, e.g. in the subsidiary frame member 210, in order to couple the second seat adaptor 700 to the second seat assembly. The adaptor coupling recess 720 may be formed in an end of the subsidiary frame member 210. When the pushchair assembly 100 comprises a pair of adaptors 700, e.g. provided on either lateral side of the pushchair assembly, then adaptor coupling recesses 720 may be formed in either end of the subsidiary frame member 210, e.g. at either lateral side of the subsidiary frame member, for receiving the adaptor protrusions of the respective adaptors. The adaptor coupling recess 720 may extend in a depth direction of the recess having a component perpendicular to the lateral direction of the pushchair assembly, e.g. component in the longitudinal direction of the pushchair assembly.

The adaptor protrusion 712 may be arcuate, or hook shaped, or may comprise an arcuate portion. The adaptor protrusion may comprise an adaptor guide surface 714. The adaptor guide surface 714 may be formed on an inside surface of the adaptor protrusion 712 with respect to the arcuate shape of the adaptor protrusion, or portion thereof. Additionally or alternatively, the adaptor guide surface 714 may be formed on an outside surface of the adaptor protrusion 712 with respect to the arcuate shape of the adaptor protrusion, or portion thereof. The adaptor guide surface 714 may be substantially parallel with the lateral direction of the pushchair assembly. In other words, a curvature axis of the adaptor guide surface 714 may have a component in, or be aligned with, the lateral direction of the pushchair assembly.

The adaptor guide surface 714 may be configured to engage one or more internal walls 722 of the adaptor coupling recess 720 as the adaptor protrusion 712 is received into the recess 720. The adaptor guide surface 714 and/or the internal wall 722 may be configured to guide the movement of the adaptor protrusion 712 into the recess 720. The adaptor protrusion and/or recess may thereby be configured to guide movement of the adaptor 700, e.g. relative to the second seat assembly 200, as the adaptor 700 is coupled to the second seat assembly. A shape of the one or more interior wall 722 may substantially correspond to a shape of the adaptor guide surface 714. For example, the interior wall may be arcuate and may be parallel with the lateral direction of the pushchair assembly.

As mentioned above, the adaptor guide surface 714 and/or the interior wall 722 may be substantially parallel with the lateral direction of the pushchair assembly. The adaptor guide surface and/or the internal wall may thereby (or otherwise) be configured, e.g. shaped, to guide the adaptor 700 to rotate about an axis extending in a lateral direction of the pushchair assembly as the adaptor 700 is coupled to the second seat assembly. Further, the adaptor protrusion may be configured, e.g. shaped, such that once the adaptor protrusions is received, e.g. substantially fully received, within the adaptor coupling recess, the adaptor protrusion and/or adaptor coupling recess restrict or prevent the adaptor protrusion from being removed from the recess via a linear movement, e.g. otherwise than by rotating the adaptor 700 about the axis in the lateral direction.

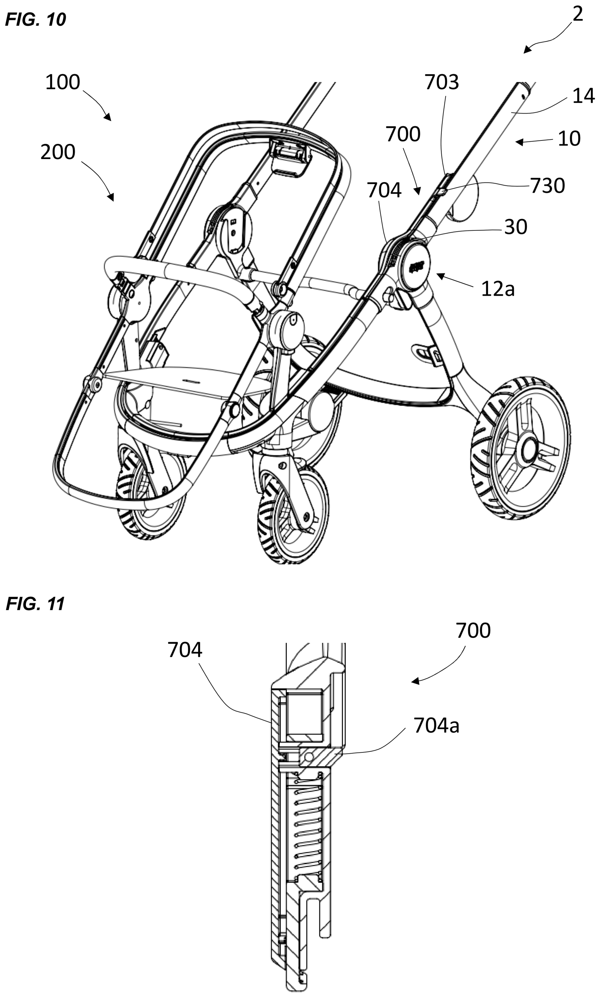

The adaptor protrusion 712 and/or the adaptor coupling recess 720, e.g. the guide surface 714 of the protrusion and/or the internal wall 722 of the adaptor coupling recess, may be configured to guide the adaptor 700 to move relative to the pushchair frame 10 such that the pushchair frame coupling 704 of the adaptor can become coupled to the pushchair frame 10, e.g. the seat dock 30 of the pushchair frame, as the adaptor 700 is coupled to the second seat assembly 200, as shown in Figure 10.

When the second seat adaptor 700 is coupled to the pushchair frame 10, the second seat adaptor may be arranged on an inner side of the font leg frame member 16, the hinge assembly 12a and the handle frame member 14 on one lateral side of the pushchair.

As mentioned above, another second seat adaptor may be coupled to the pushchair frame on the opposite lateral side of the pushchair, and may be coupled to the inner side of the font leg frame member 16, the hinge assembly 12a and the handle frame member 14, e.g. in a symmetric arrangement. The second seat adaptors 700 may thereby be configured to support a seat, e.g. the primary seat 4, between them via their primary seat couplings 702.

When the second seat adaptor 700 is coupled to the pushchair frame 10, e.g. and is arranged on the inner side of the font leg frame member 16, the hinge assembly 12a and the handle frame member 14, a shape of at least the body portion of the second seat adaptor may substantially correspond to a shape of the pushchair frame 10 when viewed in a lateral direction of the pushchair 2, e.g. projected into a plane perpendicular to the lateral direction.

As shown in Figure 7 to 10, the second seat adaptor 700 may be free from couplings between, e.g. directly between, the second seat adaptor and the pushchair frame 10 at positions between the pushchair frame coupling 704 and the second seat coupling 710, e.g. between the seat dock 30 and the second seat 220. In other words, the adaptor 700 may not be directly coupled to the pushchair frame between the pushchair frame coupling 704 and the second seat coupling 710.

With reference to Figure 11, and as mentioned above, the pushchair frame coupling 704 may be configured to couple to the seat dock 30 of the pushchair frame. The pushchair frame coupling 704 may have a shape corresponding to the shape of the docking plug of the primary seat 4. Accordingly, the shape of the pushchair frame coupling 704 may configured to couple to the primary seat coupling at the second end 703 of the adaptor. The pushchair frame coupling 704 may comprise a dock latch 704a configured to releasably latch the adaptor to the dock 30.

As described above with reference to Figure 1c, when the primary seat 4 or a primary seat adaptor is coupled to the seat dock 30 of the pushchair frame, the primary seat or a primary seat adaptor may be configured to lock the dock locking mechanism 50 to prevent the seat dock rotating about the dock axis A_{D}, e.g. to move from the deployed position to the folded position of the seat dock. However, in some arrangements, the pushchair frame coupling 704 may not be configured to engage the dock locking mechanism, e.g. the block part 52, when the second seat adaptor is coupled to the seat dock of the pushchair frame. Accordingly, when the second seat adaptor 700 is coupled to the seat dock, the seat dock may be movable, e.g. pivotable, relative to the hinge assembly 12a. However, when the second seat adaptor 700 is coupled to the second seat assembly 200 and the seat dock 30, the adaptor may be prevented from rotating at the connection between the adaptor and the seat dock, by virtue of its connected with the second seat assembly. In other arrangements, the pushchair frame coupling 704 may be configured to engage the dock locking mechanism, e.g. by urging the block part 52 to move, in order to lock the seat dock in the deployed position.

Referring again to Figure 10, in order to further secure the second seat adaptor 700 relative to the pushchair frame 10, the adaptor 700 may comprise a frame member engaging projection 730 arranged at or towards the second end 703 of the second seat adaptor, e.g. between the pushchair frame coupling 704 and the second end 703. The frame member engaging projection 730 is configured to engage a frame member of the pushchair frame, such as the handle frame member 14, to restrict or prevent rotation of the second seat adaptor 700. In particular, the frame member engaging projection 730 may be configured to engage the pushchair frame member to prevent or restrict rotations of the second seat adaptor in a direction resulting from a downward load being applied at the primary seat coupling of the adaptor. For example, the frame member engaging projection 730 may be configured to engage an upper surface of the pushchair frame member. As illustrated, the frame member engaging projection 730 may project from the body portion 705 of the adaptor on the inner side of the frame member towards the outer side of the frame member on an upper side of the frame member, so that the frame member engaging projection 730 engages the upper side of the frame member when the adaptor may otherwise move, e.g. rotate, to move the frame member engaging projection 730 in a downward direction.

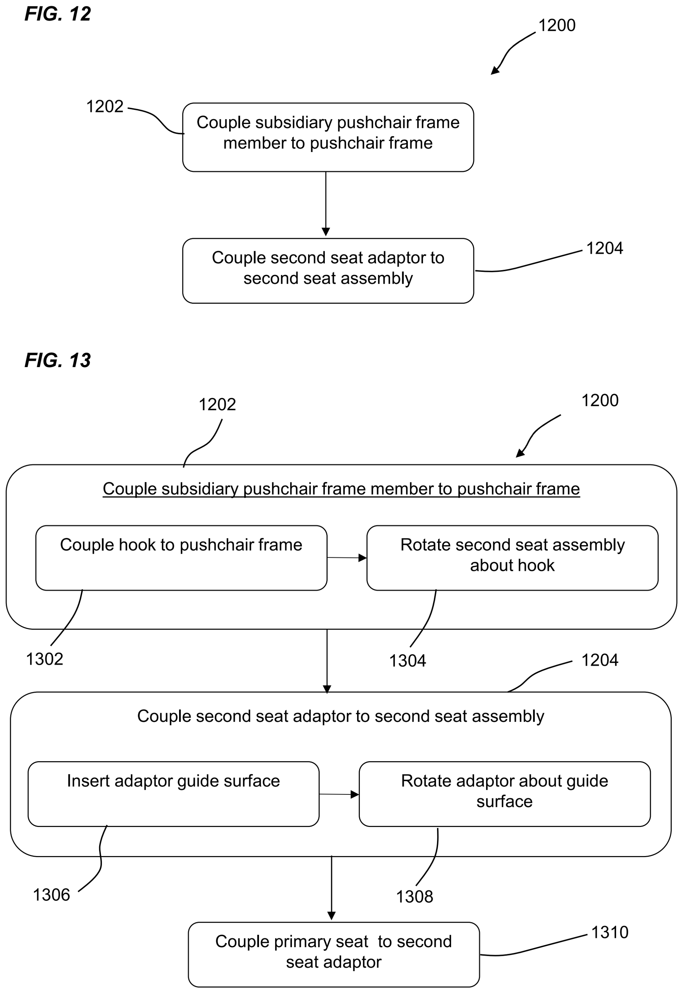

With reference to Figure 12 a method 1200 of mounting a second seat on a pushchair, e.g. by a coupling a pushchair assembly to a pushchair frame, will now be described.

The pushchair assembly, which may be the pushchair assembly 100, comprises a second seat assembly, such as the second seat assembly 200, and a second seat adaptor, such as the adaptor 700. The second seat assembly comprises a subsidiary pushchair frame, such as the subsidiary pushchair frame member 210 and the second seat, such as the second seat 220.

The second seat adaptor comprises a first end and a second end. A second seat coupling of the adaptor is provided at the first end of the adaptor for coupling to the second seat assembly. The adaptor further comprises a pushchair frame coupling between the first and second ends for coupling to the pushchair frame.

The method 1200 comprises a first step 1202, in which the subsidiary pushchair frame member is coupled to the pushchair frame.

The method 1200 further comprises a second step 1204, in which the second seat adaptor is coupled to the second seat adaptor and/or the pushchair frame using the pushchair frame coupling between the first and second ends of the adaptor.

With reference to Figure 13 another method 1300 of mounting a second seat on a pushchair will now be described. The method 1300 may comprise the first and second steps 1202, 1204 of the method 1200 described above.

According to the method 1300, the first step 1202 may comprise a first sub-step 1302, in which the subsidiary pushchair frame member is coupled to a frame member of the pushchair frame, e.g. a front lateral frame member, such as the front lateral frame member 24, using a hook portion provided on the subsidiary pushchair frame member. The hook portion may be the hook portion 212 described above.

The first step 1202 may further comprise a second sub-step 1304, in which the second seat assembly is rotated about the frame member coupled to the hook portion. As described above, the hook portion 212 may comprise a guide surface 212a configured to support and/or guide rotation of the second seat assembly 200 about the frame member, e.g. the front lateral frame member 24, to facilitate further coupling of the second seat assembly to the pushchair frame.

The second step 1204, according to the method 1300, may comprise a third sub-step 1306, in which an adaptor protrusion comprising a guide surface is inserted into a recess in the second seat assembly, e.g. in the subsidiary frame member.

The second step 1204 may further comprise a fourth sub-step 1308, in which the second seat adaptor is rotated and the adaptor protrusion further inserted in to the recess such that movement of the adaptor is at least partially guided and/or support by engagement between the guide surface and an internal wall of the recess. As described above, coupling the second seat adaptor to the second seat assembly in this way may guide movement of the adaptor and/or facilitate coupling of the adaptor to the pushchair frame 10 as the adaptor is coupled to the second seat assembly. In particular, the pushchair frame coupling may be coupled to the pushchair frame 10, e.g. to the seat dock 30 of the pushchair frame, as the adaptor protrusion is inserted into the recess.

The method 1300 or the method 1200 may further comprise a third step 1310, in which a primary seat of the pushchair, such as the seat 4, is coupled to the second end 703 of the second seat adaptor, e.g. to the primary seat coupling 702 of the adaptor. The primary seat may thereby be supported on the pushchair frame by the adaptor.

The following additional statements of invention also form part of the present specification:
Statement 1. A pushchair assembly for mounting a second seat on a pushchair frame of a pushchair, the pushchair assembly comprising:
   a second seat assembly, wherein the second seat assembly comprises:
      a subsidiary pushchair frame member configured to couple to a frame member of the pushchair frame; and
      the second seat for the pushchair mounted on the subsidiary pushchair frame member; and
   a second seat adaptor having a first end and a second end, wherein the adaptor comprises a second seat coupling at the first end, the second seat coupling configured to couple to the second seat assembly; a pushchair frame coupling between the first and second ends for coupling to the pushchair frame; and a primary seat coupling at the second end, wherein the primary seat coupling is for supporting a primary seat of the pushchair.
Statement 2. The pushchair assembly of statement 1, wherein the subsidiary pushchair frame member is configured, e.g. shaped, to be placed alongside a frame member of the pushchair frame when the subsidiary pushchair frame member is coupled to the frame member, e.g. between positions on the subsidiary pushchair frame member is coupled to the pushchair frame member.
Statement 3. The pushchair assembly of statement 1 or 2, wherein the second seat assembly comprises one or more latches for coupling to one or more complementary latch coupling portions on the pushchair frame.
Statement 4. The pushchair assembly of any of the preceding statements, wherein the pushchair frame coupling is a seat dock coupler configured to couple to a seat dock of the pushchair frame.
Statement 5. The pushchair assembly of statement 4, wherein the primary seat coupling of the adaptor corresponds in shape to the seat dock of the pushchair frame.
Statement 6. The pushchair assembly of any of the preceding statements, wherein the primary seat coupling comprises an adaptor seat dock for the primary seat of the pushchair assembly to be docked to.
Statement 7. The pushchair assembly of statement 6, wherein the adaptor seat dock is configured to correspond in shape to the seat dock of the pushchair to which the second seat adaptor couples.
Statement 8. The pushchair assembly of any of the preceding statements, wherein the adaptor comprises a protrusion configured to engage a frame member of the pushchair frame between the pushchair frame coupling and the second end, in order to prevent or restrict rotation of the adaptor relative to the pushchair frame at the seat dock.
Statement 9. The pushchair assembly of any of the preceding statements, wherein the second seat assembly comprises a hook portion configured to hook around a frame member of the pushchair frame and guide rotation of the second seat assembly about the frame member towards a position in which the second seat assembly further couples to the pushchair frame.
Statement 10. The pushchair assembly of any of the preceding statements, wherein the assembly further comprises the pushchair frame.
Statement 11. The pushchair assembly of any of the preceding statements, wherein the pushchair frame comprises an arcuate frame member, wherein a shape of the subsidiary pushchair frame member corresponds to a shape of the arcuate frame member.
Statement 12. The pushchair assembly of any of the preceding statements, wherein the pushchair frame comprises a laterally extending frame member extending between front leg members of the frame, wherein the subsidiary pushchair frame member is configured, e.g. shaped, to be placed alongside, and optionally in contact with, the laterally extending frame member
Statement 13. The pushchair assembly of statement 12 when depending on statement 3, wherein the one or more complementary latch coupling portions are provided on the laterally extending frame member and/or one or more other frame members adjacent the laterally extending frame member.
Statement 14. The pushchair assembly of any of the preceding statements, wherein the second seat coupling of the adaptor comprises an arcuate projection portion configured to be received within a recess formed in the second seat assembly.
Statement 15. The pushchair assembly of statement 14, wherein the recess comprises an internal wall configured to engage the second seat coupling to guide movement of the adaptor as the adaptor is coupled to the second seat assembly to permit the pushchair frame coupling of the adaptor to couple to the pushchair frame, e.g. a seat dock of the pushchair frame.
Statement 16. An adaptor for mounting primary and second seats on a pushchair frame, wherein the adaptor has a first end and a second end, and a pushchair frame coupling arranged between the first and second ends for coupling the adaptor to the pushchair frame, e.g. to a seat dock of the pushchair frame, wherein the adaptor comprises a second seat coupling, for coupling to the second seat [e.g. to a second seat assembly comprising the second seat], at the first end of the adaptor, and a primary seat coupling, for the primary seat to couple to the adaptor, at the second end of the adaptor, wherein the adaptor is free from couplings for directly coupling the adaptor to the pushchair frame between the pushchair frame coupling and the first end of the adaptor.
Statement 17. A method of mounting a second seat on a pushchair frame, e.g. of a pushchair, using a pushchair assembly, wherein the pushchair assembly comprises a second seat assembly comprising:
   a subsidiary pushchair frame member configured to couple to a frame member of the pushchair frame; and
   the second seat for the pushchair mounted on the subsidiary pushchair frame member, wherein the method comprises:
      coupling the subsidiary pushchair frame member to the pushchair frame; and
      coupling a second seat adaptor of the pushchair assembly to the second seat assembly and the pushchair frame, wherein the adaptor comprises a first end and a second end, wherein the adaptor comprises a second seat coupling at the first end for coupling to the second seat assembly, a pushchair frame coupling between the first and second ends for coupling to the pushchair frame; and a primary seat coupling at the second end, wherein the primary seat coupling is for supporting a primary seat for the pushchair.
Statement 18. The method of statement 17, wherein the method further comprises:
   coupling, e.g. initially coupling, the subsidiary pushchair frame member to a frame member of the pushchair frame using a hook portion provided on the subsidiary pushchair frame member.
Statement 19. The method of statement 18, wherein the method further comprises:
   coupling, e.g. further coupling, the subsidiary pushchair frame member, to the pushchair frame by rotating the second seat assembly about the frame member coupled to the hook portion.
Statement 20. The method of any of statements 17 to 19, wherein the method further comprises:
   inserting an adaptor protrusion of the adaptor into a recess in the second seat assembly in order to couple the adaptor to the second seat assembly.
Statement 21. The method of statement 20, wherein the method further comprises rotating the adaptor as the protrusion is inserted into the recess, such that movement of the adaptor is at least partially guided and/or supported by engagement between a guide surface of the adaptor protrusion and an internal wall of the recess.
Statement 22. The method of statement 21, wherein the method further comprises:
   coupling the second seat adaptor to the pushchair frame as the protrusion is inserted into the recess.
Statement 23. The method of any of statements 17 to 22, wherein the method further comprises:
   coupling a primary seat of the pushchair to the second end of the second seat adaptor such that the primary seat is supported on the pushchair frame by the adaptor.

It will be appreciated by those skilled in the art that although the invention has been described by way of example, with reference to one or more exemplary examples, it is not limited to the disclosed examples and that alternative examples could be constructed without departing from the scope of the invention as defined by the appended claims.

## Claims

1. A pushchair assembly for mounting a second seat on a pushchair frame of a pushchair, the pushchair assembly comprising:
a second seat assembly, wherein the second seat assembly comprises:
a subsidiary pushchair frame member configured to couple to a frame member of the pushchair frame; and
the second seat for the pushchair mounted on the subsidiary pushchair frame member; and
a second seat adaptor having a first end and a second end, wherein the adaptor comprises a second seat coupling at the first end, the second seat coupling configured to couple to the second seat assembly; a pushchair frame coupling between the first and second ends for coupling to the pushchair frame; and a primary seat coupling at the second end, wherein the primary seat coupling is for supporting a primary seat of the pushchair.

2. The pushchair assembly of claim 1, wherein the subsidiary pushchair frame member is configured, e.g. shaped, to be placed alongside a frame member of the pushchair frame when the subsidiary pushchair frame member is coupled to the frame member, e.g. between positions on the subsidiary pushchair frame member is coupled to the pushchair frame member.

3. The pushchair assembly of claim 1 or 2, wherein the second seat assembly comprises one or more latches for coupling to one or more complementary latch coupling portions on the pushchair frame.

4. The pushchair assembly of any of the preceding claims, wherein the pushchair frame coupling is a seat dock coupler configured to couple to a seat dock of the pushchair frame, optionally wherein the primary seat coupling of the adaptor corresponds in shape to the seat dock of the pushchair frame.

5. The pushchair assembly of any of the preceding claims, wherein the primary seat coupling comprises an adaptor seat dock for the primary seat of the pushchair assembly to be docked to, optionally wherein the adaptor seat dock is configured to correspond in shape to the seat dock of the pushchair to which the second seat adaptor couples.

6. The pushchair assembly of any of the preceding claims, wherein the adaptor comprises a protrusion configured to engage a frame member of the pushchair frame between the pushchair frame coupling and the second end, in order to prevent or restrict rotation of the adaptor relative to the pushchair frame at the seat dock, and/or wherein the second seat assembly comprises a hook portion configured to hook around a frame member of the pushchair frame and guide rotation of the second seat assembly about the frame member towards a position in which the second seat assembly further couples to the pushchair frame, and/or wherein the assembly further comprises the pushchair frame, and/or wherein the pushchair frame comprises an arcuate frame member, wherein a shape of the subsidiary pushchair frame member corresponds to a shape of the arcuate frame member.

7. The pushchair assembly of any of the preceding claims, wherein the pushchair frame comprises a laterally extending frame member extending between front leg members of the frame, wherein the subsidiary pushchair frame member is configured, e.g. shaped, to be placed alongside, and optionally in contact with, the laterally extending frame member

8. The pushchair assembly of claim 7 when depending on claim 3, wherein the one or more complementary latch coupling portions are provided on the laterally extending frame member and/or one or more other frame members adjacent the laterally extending frame member.

9. The pushchair assembly of any of the preceding claims, wherein the second seat coupling of the adaptor comprises an arcuate projection portion configured to be received within a recess formed in the second seat assembly, optionally wherein the recess comprises an internal wall configured to engage the second seat coupling to guide movement of the adaptor as the adaptor is coupled to the second seat assembly to permit the pushchair frame coupling of the adaptor to couple to the pushchair frame, e.g. a seat dock of the pushchair frame.

10. An adaptor for mounting primary and second seats on a pushchair frame, wherein the adaptor has a first end and a second end, and a pushchair frame coupling arranged between the first and second ends for coupling the adaptor to the pushchair frame, e.g. to a seat dock of the pushchair frame, wherein the adaptor comprises a second seat coupling, for coupling to the second seat [e.g. to a second seat assembly comprising the second seat], at the first end of the adaptor, and a primary seat coupling, for the primary seat to couple to the adaptor, at the second end of the adaptor, wherein the adaptor is free from couplings for directly coupling the adaptor to the pushchair frame between the pushchair frame coupling and the first end of the adaptor.

11. A method of mounting a second seat on a pushchair frame, e.g. of a pushchair, using a pushchair assembly, wherein the pushchair assembly comprises a second seat assembly comprising:
a subsidiary pushchair frame member configured to couple to a frame member of the pushchair frame; and
the second seat for the pushchair mounted on the subsidiary pushchair frame member, wherein the method comprises:
coupling the subsidiary pushchair frame member to the pushchair frame; and
coupling a second seat adaptor of the pushchair assembly to the second seat assembly and the pushchair frame, wherein the adaptor comprises a first end and a second end, wherein the adaptor comprises a second seat coupling at the first end for coupling to the second seat assembly, a pushchair frame coupling between the first and second ends for coupling to the pushchair frame; and a primary seat coupling at the second end, wherein the primary seat coupling is for supporting a primary seat for the pushchair.

12. The method of claim 11, wherein the method further comprises:
coupling, e.g. initially coupling, the subsidiary pushchair frame member to a frame member of the pushchair frame using a hook portion provided on the subsidiary pushchair frame member, optionally wherein the method further comprises:
coupling, e.g. further coupling, the subsidiary pushchair frame member, to the pushchair frame by rotating the second seat assembly about the frame member coupled to the hook portion.

13. The method of claim 11 or 12, wherein the method further comprises:
inserting an adaptor protrusion of the adaptor into a recess in the second seat assembly in order to couple the adaptor to the second seat assembly.

14. The method of claim 13, wherein the method further comprises rotating the adaptor as the protrusion is inserted into the recess, such that movement of the adaptor is at least partially guided and/or supported by engagement between a guide surface of the adaptor protrusion and an internal wall of the recess, optionally wherein the method further comprises:
coupling the second seat adaptor to the pushchair frame as the protrusion is inserted into the recess.

15. The method of any of claims 11 to 14, wherein the method further comprises:
coupling a primary seat of the pushchair to the second end of the second seat adaptor such that the primary seat is supported on the pushchair frame by the adaptor.
